(19) Europäisches Patentamt
European Patent Office
Office européen des brevets

(11) **EP 0 797 265 B1**

(12) **EUROPÄISCHE PATENTSCHRIFT**

(45) Veröffentlichungstag und Bekanntmachung des Hinweises auf die Patenterteilung:
**22.12.2004 Patentblatt 2004/52**

(51) Int Cl.⁷: **H01M 4/86**, H01M 8/10

(21) Anmeldenummer: **97104134.8**

(22) Anmeldetag: **12.03.1997**

(54) **Gasdiffusionselektrode für Membranbrennstoffzellen und Verfahren zu ihrer Herstellung**

Gas diffusion electrode for membrane fuel cells and method of making same

Electrode à diffusion gazeuse pour piles à combustible à membrane et méthode de fabrication

(84) Benannte Vertragsstaaten:
**DE FR GB IT NL**

(30) Priorität: **23.03.1996 DE 19611510**

(43) Veröffentlichungstag der Anmeldung:
**24.09.1997 Patentblatt 1997/39**

(73) Patentinhaber: **Umicore AG & Co. KG**
**63457 Hanau-Wolfgang (DE)**

(72) Erfinder:
• **Fischer, Andreas**
**60386 Frankfurt/M. (DE)**
• **Wendt, Hartmut, Prof.Dr.**
**64807 Dieburg (DE)**

• **Zuber, Ralf, Dr.**
**63762 Grossostheim (DE)**

(74) Vertreter: **Herrmann, Reinhard**
**OMG AG**
**FI-PAT**
**Postfach 1351**
**63403 Hanau (DE)**

(56) Entgegenhaltungen:
| | |
|---|---|
| **EP-A- 0 560 295** | **EP-A- 0 622 861** |
| **EP-A- 0 718 903** | **EP-A- 0 785 588** |
| **WO-A-94/14203** | **WO-A-95/20691** |
| **WO-A-97/13287** | **AT-B- 389 020** |
| **CH-A- 647 004** | **US-A- 4 581 116** |
| **US-A- 5 211 984** | **US-A- 5 399 184** |

EP 0 797 265 B1

**Beschreibung**

Die Erfindung betrifft eine poröse Gasdiffusionselektrode für Membranbrennstoffzellen auf einer ionenleitenden Polymermembran sowie ein Verfahren zu ihrer Herstellung. Der Einsatz von Gasdiffusionselektroden für Brennstoffzellen ist seit langem Stand der Technik. Für die Membranbrennstoffzelle wurden unter Verwendung von Elektrokatalysatoren auf der Basis von Platinbeziehungsweise Platinlegierungskatalysatoren auf leitfähigen Kohlenstoffträgern mehrere Verfahren zur Herstellung dieser Elektroden entwickelt.

Die Optimierung des Kontaktes der drei Phasen Katalysator/Elektrolyt/Gas erweist sich gerade bei einem Festelektrolytsystem, wie es die Membranbrennstoffzelle mit einer ionenleitenden Membran als Elektrolyt darstellt, als besonders schwierig. Herkömmliche Gasdiffusionselektroden für den Einsatz in sauren Brennstoffzellen (z. B. der phosphorsauren Brennstoffzelle) werden im allgemeinen aus einer Mischung aus Polytetrafluorethylen (PTFE) und einem Elektrokatalysator aus platiniertem Ruß hergestellt, die auf eine Gasverteilerstruktur aufgezogen wird. Nach einem Tempervorgang erhält man so eine poröse, oberflächenreiche und teils hydrophile, teils hydrophobe Struktur der Elektrode, die im Betrieb in einer Brennstoffzelle mit einem flüssigen Elektrolyten einen guten Zugang der Arbeitsgase zu den elektrochemisch aktiven Zentren bei gleichzeitiger guter Benetzung durch den Elektrolyten ermöglicht. Der Zutritt des flüssigen Elektrolyten in die Tiefe der Elektrode erschließt eine ausreichend hohe Anzahl dieser elektrochemisch aktiven Zentren.

Eine Membranbrennstoffzelle besteht aus einer Membran aus einem ionenleitenden Polymer, im folgenden auch kurz als Ionomer bezeichnet, mit beidseitig aufgebrachten Gasdiffusionselektroden als Kathode beziehungsweise Anode der Brennstoffzelle. Kathode und Anode enthalten geeignete feinteilige Elektrokatalysatoren zur Beschleunigung der Oxidation des Brennstoffes, in der Regel Wasserstoff, an der Anode und Reduktion des Sauerstoffs an der Kathode. Die Polymermembran bildet den Elektrolyten. Die Stromleitung durch die Membran erfolgt durch Transport von Protonen.

Als katalytisch aktive Komponente des Elektrokatalysators wird bevorzugt Platin verwendet, welches noch mit einem oder mehreren Metallen der Gruppen VB, VIB, VIII und IB des Periodensystems der Elemente legiert sein kann. Die optimale Teilchengröße der katalytisch aktiven Legierungpartikel liegt im Bereich zwischen 2 und 10 nm. Zur Verwendung in den Elektroden von Brennstoffzellen werden die katalytisch aktiven Komponenten als Trägerkatalysatoren eingesetzt, das heißt die Legierungspartikel werden auf feinteiligen, elektrisch leitfähigen Kohlenstoffmaterialien wie zum Beispiel Ruß abgeschieden und in dieser Form in die Elektroden eingearbeitet. Alternativ besteht jedoch auch die Möglichkeit, die Legierungspartikel ohne Träger direkt in das Elektrodenmaterial einzubringen.

In einer Membranbrennstoffzelle ist der Zugang des Elektrolyten in die Tiefe der Elektrode nicht ohne weiteres möglich. Die sogenannte Drei-Phasen-Zone bleibt ohne besondere Vorkehrungen auf den Bereich der Berührungsflächen zwischen Membran und Elektroden beschränkt.

Aus der US 4,876,115 ist ein Verfahren zur Modifizierung kommerzieller Gasdiffusionselektroden bekannt, welche gewöhnlich in flüssigen Elektrolytsystemen eingesetzt werden. Diese Elektroden enthalten als Bindemittel hydrophobe Partikel aus polymerem PTFE, welches gleichzeitig die Benetzungseigenschaften der Elektrode reguliert und die Porosität der Elektrodenschicht stabilisiert. Zur Verbesserung des Kontaktes der drei Phasen Katalysator/Elektrolyt/Gas wird die vorgefertigte Elektrode mit einer Lösung eines protonenleitenden Materials durch Besprühen getränkt und dann mit der besprühten Seite mit der protonenleitenden Membran in Kontakt gebracht. Die Porosität der Elektrode wird nur durch die Zwischenräume zwischen den Partikeln des Elektrokatalysators und des hydrophoben PTFE gebildet.

Wird die Elektrode mit einem Ionomer als protonenleitendes Material getränkt, so werden durch diese Vorbehandlung nur etwa 10 μm der Tiefe der Elektrode vom Elektrolyten erreicht. Dadurch bleibt ein Großteil des Elektrokatalysators in der im allgemeinen 100 bis 200 μm dicken Elektrode elektrochemisch ungenutzt. Mit diesen Elektroden können bei Flächenkonzentrationen von 0,35 bis 0,5 mg Pt/cm$^2$ ähnliche Leistungsdaten wie mit konventionellen Elektroden mit Flächenkonzentrationen von 4 mg Pt/cm$^2$ erzielt werden. Allerdings ist die maximale Konzentration bei Verwendung von Trägerkatalysatoren wegen der nur etwa 10 μm dicken elektrochemisch nutzbaren Schichtdicke auf Werte von etwa 0,5 mg Pt/cm$^2$ beschränkt. Eine Leistungssteigerung durch Erhöhung der Flächenkonzentration an Katalysator ist damit nur im geringen Umfang möglich. Das schließt solche Elektroden von Anwendungen aus, die nach heutigem Kenntnisstand Katalysatorkonzentrationen von 4 mg Pt/cm$^2$ und mehr erfordern, wie es zum Beispiel bei der Direkt-Methanol-Brennstoffzelle notwendig ist. Zur Herstellung solcher Elektroden mit höheren, elektrochemisch nutzbaren Konzentrationen muß zu trägerfreien Katalysatoren übergegangen werden.

Von S. Escribano et al. (Editions de l'École Polytechnique de Montreal 1995, Seiten 135 - 143) wird die Herstellung von Elektroden für Membranbrennstoffzellen durch Sprühen einer Dispersion aus gelöstem Ionomer, Elektrokatalysator und PTFE auf die erwärmte Membran beschrieben. Die Elektroden sind nur wenige Mikrometer dick und weisen Poren mit Porenradien von etwa 50 nm auf. Auf die Elektrodenschichten werden abschließend Gasverteilerstrukturen heiß aufgepreßt. Dabei werden Temperaturen nahe dem Schmelzpunkt des PTFE (320 - 360°C) angewendet, um die PTFE-Partikel zu versintern. In diesen Elektroden dient PTFE als Binder und Hydrophobierungsmittel.

Gemäß der US 5,211,984 verzichtet man auf PTFE als Binder und Hydrophobierungsmittel und erzielt eine nicht selbsttragende Elektrode, die nur aus Katalysator und Ionomerem besteht. Hierzu trägt man in einer Verfahrensvariante eine Suspension aus gelöstem Ionomeren und platiniertem Ruß auf einen PTFE-Träger auf, trocknet und verpreßt die vorformierte Elektrode mit dem PTFE-Träger auf eine Membran. Anschließend kann der PTFE-Träger rückstandsfrei abgezogen werden. Die Elektrode von etwa 10 µm Dicke haftet nach dem Heißpreßvorgang sehr gut auf der Membran.

Die so hergestellte Elektrode besteht aus einer dichten Schicht aus Ionomerem und Elektrokatalysator. Die Elektrodenschicht enthält also im wesentlichen keine Poren und auch keine hydrophoben Zusätze. Die Elektrodenschicht ist daher auf eine maximale Dicke von 10 µm beschränkt. Diese maximale Schichtdicke gewährleistet noch einen ausreichend guten Transport des Sauerstoffs zu den Katalysatorpartikeln durch Diffusion durch das Ionomer. Bevorzugt wird eine Schichtdicke von weniger als 5 µm angestrebt. Auch diese Elektroden erzielen mit Flächenkonzentrationen von weniger als 0,35 mg Pt/cm$^2$ ähnliche Leistungsdaten wie konventionelle Elektroden mit Konzentrationen von 4 mg Pt/cm$^2$. Allerdings lassen sich auch bei diesen Elektroden bei Verwendung von Trägerkatalysatoren kaum Leistungssteigerungen erzielen, da die Flächenkonzentration wegen der geringen Schichtdicke nicht wesentlich erhöht werden kann.

Ionomere Polymermembranen können in einer azidischen protonenleitenden H$^+$-Form oder nach Austausch der Protonen gegen einwertige Ionen wie zum Beispiel Na$^+$ und K$^+$ in einer nichtazidischen Na$^+$- oder K$^+$-Form vorliegen. Die nichtazidische Form der Polymermembranen ist gewöhnlich gegenüber Temperaturbelastungen beständiger als ihre azidische Form. Für das Aufbringen der Elektrodenschichten werden die Membranen daher bevorzugt in ihrer Na$^+$-Form verwendet - ebenso das in Lösung vorliegende Ionomer für die Elektrodenschicht. Im letzten Verfahrensschritt der Elektrodenherstellung wird das Polymermaterial durch sogenannte Rückprotonierung wieder in die azidische, protonenleitende Form überführt. Dies geschieht gewöhnlich durch Behandeln der Einheit aus Elektrode/Membran/Elektrode (EME-Einheit) in Schwefelsäure.

Gemäß der US 5,211,984 kann die Robustheit der Elektrodenschichten weiter verbessert werden, wenn das gelöste Ionomer in der zur Herstellung der Elektrodenschicht verwendeten Suspension aus Katalysator und Ionomerlösung in einer thermoplastischen Form vorliegt. Die thermoplastische Form wird durch Ionenaustausch der protonenleitenden Form des Ionomers mit zum Beispiel Tetrabutylammonium-Kationen erhalten.

Die US 4,469,579 beschreibt die Herstellung von porösen Elektroden auf Festelektrolytmembranen für die Verwendung in Natriumchlorid-Elektrolysezellen. Die Elektroden werden durch Besprühen der Membran mit einer Dispersion eines Elektrokatalysators in einer Lösung eines Ionomers hergestellt, wobei die Dispersion Porenbildner enthalten kann, um Poren für den Transport der bei der Elektrolyse gebildeten Gase zu erzeugen. Die Porenbildner werden nach Entfernung des Lösungsmittels, d.h. nach Trocknung der Elektroden aus diesen herausgelöst.

Als Porenbildner werden Oxide, Hydroxide, Nitrate oder Carbide verschiedener Elemente mit Teilchengrößen zwischen 0,025 mm und 3 mm vorgeschlagen. Bevorzugt werden faserförmige Porenbildner mit Längen bis zu 50 mm eingesetzt. Ein bevorzugter Porenbildner ist Zinkoxid, welches mit Natronlauge nach Trocknung aus der Elektrode herausgelöst wird.

Die DE-OS 15 46 701 (entsprechend US 3,385,780) offenbart ein Verfahren zur Herstellung einer porösen Elektrode für Brennstoffzellen. Gemäß diesem Verfahren wird ein feinteiliger Elektrokatalysator mit einem hydrophoben Polymer und einem Füllstoff zur Herstellung einer ersten Mischung innig vermischt. Eine zweite Mischung wird ohne den Elektrokatalysator hergestellt. Beide Mischungen werden in zwei getrennten Schichten in eine Presse eingeführt und dann bei einem Druck zwischen 350·10$^5$ (350) und 840·10$^5$ Pa (840 bar) verpreßt. Anschließend wird der Füllstoff entfernt, so daß ein einziger poröser Körper entsteht. Bei dem Füllstoff bzw. Porenbildner handelt es sich entweder um ein thermisch zersetzbares Material oder um ein Material, welches sich mit einer starken Base entfernen läßt. Als mögliche Füllstoffe werden Ammoniumoxalat, Ammoniumcarbonat, Kieselerdegel, Tonerde und Calciumcarbonat genannt. Als wasserabstoßendes Polymer wird zum Beispiel Polytetrafluorethylen verwendet.

Die DE-OS 15 46 701 macht keine Aussage über die erzielten Porositäten der Elektroden. Aufgrund des hohen Preßdruckes ist jedoch davon auszugehen, daß das Elektrodenmaterial an sich sehr kompakt ist und seine Porosität sich nur aus den durch den Füllstoff hervorgerufenen Poren zusammensetzt.

Die EP 0 622 861 A1 beschreibt ebenfalls eine Membran-Elektrodenstruktur. Zur Herstellung der Elektrode wird eine sogenannte Tinte aus einer 5 %igen Ionomerlösung in 50 % Isopropanol, 25 % Methanol und 20 % Wasser, 1-Methoxy, 2-Propanol und Pt/C-Katalysator (20 Gew.-% Pt auf Vulcan-Ruß) hergestellt. Die Tinte wird mit Hilfe eines Siebdruckverfahrens auf die Polymermembran aufgebracht. Elektrodenbeschichtung und Membran werden anschließend bei 127°C unter einem Druck von 20,7·10$^5$ Pa (20,7 bar) miteinander verpreßt. In der Beschreibung dieser Patentanmeldung wird angeführt, daß die Elektrodenbeschichtung porös sein sollte. Es werden mittlere Porendurchmesser von 0,01 bis 50 µm, bevorzugt 0,1 bis 30 µm und Porositäten von 10 bis 99 %, bevorzugt 10 bis 60 %, angegeben. Für den Fachmann ist jedoch klar, daß diese Porositäten mit dem offenbarten Herstellverfahren keinesfalls realisiert werden können. Das gilt sowohl für die Porendurchmesser als auch für die Porositäten.

Die EP 0 560 295 A1 beschreibt eine Polymerelektrolyt-Brennstoffzelle. Die Elektrodenschichten enthalten zur Einstellung ihrer hydrophoben Eigenschaften PTFE. Durch Variation des Wassergehaltes in der Elektrodentinte kann die Porosität der Schichten zwischen 40 und 50% verändert werden. Die Elektrodenschichten werden bei 120°C und einem

Druck von $100 \cdot 10^5$ Pa (100 kg/cm$^2$) mit der Polymermembran verpreßt. Die EP 0 560 295 A1 macht keinerlei Angaben über die Veränderung der Porosität durch diesen Heißpreßvorgang.

Die WO 97/13287 beschreibt unter anderem die Herstellung von Elektrodenschichten, welche eine Porosität von wenigstens 30 und nicht mehr als 90% aufweisen sollen. Zur Herstellung der Schichten wird eine Tinte aus einer Lösung eines Ionomers, Elektrokatalysator, TBAOH und Propylencarbonat angefertigt. Die Tinte wird auf die Polymermembran aufgestrichen. Anschließend wird die so hergestellte Membran-Elektrodeneinheit bei 195 °C und einem Druck von etwa 4540 kPa (100 pounds per cm$^2$) für die Dauer von 5 Minuten heiß verpreßt.

Die Leistungsdaten von Brennstoffzellen hängen sehr stark von dem gewählten Oxidationsmittel ab. Maximale Werte werden bei Verwendung von reinem Sauerstoff erzielt. Beim Einsatz von Luft sinken die Leistungsdaten deutlich ab.

Poymerelektrolyt-Brennstoffzellen, die Gegenstand dieser Erfindung sind, sollen hauptsächlich als Stromlieferanten in Fahrzeugen eingesetzt werden. Hierbei wird angestrebt, die Brennstoffzellen mit Luft zu betreiben. Daher ist die Optimierung der Gasdiffusionselektroden für den Luftbetrieb von entscheidender Wichtigkeit für den erfolgreichen Einsatz von Brennstoffzellen als Energielieferanten in Kraftfahrzeugen. Aufgabe der vorliegenden Erfindung ist es, Gasdiffusionselektroden für Membranbrennstoffzellen anzugeben, die durch einen optimierten Kontakt der drei Phasen Katalysator/Elektrolyt/Gas wesentlich verbesserte Leistungsdaten im Luftbetrieb aufweisen. Außerdem soll ein Verfahren zur Herstellung dieser Gasdiffusionselektrode angegeben werden.

Diese Aufgabe wird durch eine Gasdiffusionselektrode für Membranbrennstoffzellen gelöst, die aus einem feinteiligen Elektrokatalysator besteht, welcher in einem protonenleitenden Polymer dispergiert ist, wobei die Gasdiffusionselektrode eine Dicke im Bereich zwischen 5 und 100 µm aufweist. Die Gasdiffusionselektrode ist dadurch gekennzeichnet, daß die Elektrode eine bimodale Porenverteilung mit einer Gesamtporosität von mehr als 40 und weniger als 75 % aufweist, wobei die Porosität sich aus kleinen Poren mit mittleren Durchmessern bis zu 0,5 µm und großen Poren mit mittleren Durchmessern von 1 bis 20 µm zusammensetzt.

Die protonenleitende Polymermembran besteht bevorzugt aus einem Fluorkohlenstoff-Vinylether-Copolymer, welches auch als Perfluorkohlenstoff bezeichnet wird. Eine solche Membran wird zum Beispiel unter dem Handelsnamen Nafion® von E.I. duPont vertrieben.

Die Elektrode ist sowohl als Kathode als auch als Anode geeignet. Als feinteilige Elektrokatalysatoren können alle auf dem Gebiet der Brennstoffzellen bekannten Katalysatoren als Trägerkatalysatoren oder trägerfreie Katalysatoren eingesetzt werden. Im Falle von Trägerkatalysatoren werden gewöhnlich feinteilige Ruße in graphitierter oder nicht graphitierter Form als Träger eingesetzt. Als katalytisch aktive Komponente dient Platin, welches mit weiteren Metallen wie Cobalt, Chrom, Wolfram, Molybdän, Eisen, Kupfer, Nickel und Ruthenium legiert sein kann. Ein bevorzugte Legierung ist zum Beispiel Platin/Cobalt/Chrom, welche mit Partikelgrößen im Bereich zwischen 2 und 10 nm auf den Rußen abgeschieden wird.

Die Elektrode weist Schichtdicken im Bereich zwischen 5 und 100 µm auf. Unterhalb einer Dicke von 5 µm wird die Elektrode wegen ihrer hohen Porosität zunehmend unzusammenhängend. Oberhalb von 100 µm Dicke nimmt trotz der hohen Porosität die elektrochemische Nutzbarkeit der Schicht langsam ab.

Der große zur Verfügung stehende Schichtdickenbereich ermöglicht Flächenkonzentrationen an Elektrokatalysatoren zwischen 0,01 und 4 mg Pt/cm$^2$. Zu diesem Zweck können geträgerte Elektrokatalysatoren mit 5 bis 40 Gew.-% Platin bezogen auf das Gesamtgewicht des Katalysators eingesetzt werden. Das Gewichtsverhältnis zwischen dem Ionomer der Schicht und dem darin dispergierten feinteiligen Elektrokatalysator kann zwischen 1 : 1 bis 1 : 10 gewählt werden. Bevorzugt sind Gewichtsverhältnisse zwischen 1 : 1,5 und 1 : 5. Bei zu hohem Anteil des Ionomers am Gesamtgewicht der Elektrode wird die Zugänglichkeit der Katalysatorpartikel für die Gase beeinträchtigt. Ein zu geringer Ionomeranteil führt dagegen zu einer ungenügenden Einbindung der Katalysatorpartikel in das Ionomermaterial.

Zur Herstellung der erfindungsgemäßen Gasdiffusionselektrode wird eine Beschichtungsdispersion aus dem feinteiligen Elektrokatalysator in einer Lösung des ionenleitenden Polymers angesetzt und auf die zu beschichtende Polymermembran aufgesprüht.

Zu diesem Zweck wird die ionenleitende Polymermembran in einer nichtazidischen, temperaturstabilen Modifikation eingesetzt und während der Sprühbeschichtung auf eine Temperatur im Bereich zwischen 130 und 170°C erwärmt. Neben dem Elektrokatalysator wird der Beschichtungsdispersion ein Porenbildner oder eine Mischung verschiedener Porenbildner mit einer mittleren Korngröße im Bereich zwischen 0,1 und 10 µm zugefügt. Nach dem Trocknen der Elektrodenbeschichtung wird das Ionomermaterial der Anordnung aus Elektrode/Membran/Elektrode durch Behandeln mit einer Säure, gewöhnlich 1 N Schwefelsäure, in die protonenleitende Form überführt.

Bei dem Porenbildner kann es sich um einen Stoff handeln, der bei der notwendigen Rückprotonierung des Ionomermaterials durch die Säure aufgelöst wird. Bevorzugte Porenbildner dieser Art sind Carbonate und Bicarbonate der Alkali- und Erdalkalimetalle. Alternativ hierzu können auch solche Stoffe verwendet werden, die bei den gewählten Beschichtungstemperaturen von 130 bis 170°C thermisch zersetzt werden. Geeignet hierfür sind Stoffe mit einer Zersetzungstemperatur zwischen 50 und 170°C. Dabei kann es sich zum Beispiel um Ammoniumcarbonat oder Ammoniumbicarbonat handeln.

Eine weitere Möglichkeit besteht in der Verwendung von Porenbildnern, die erst bei Temperaturen zersetzt werden, die oberhalb der Beschichtungstemperaturen liegen. Ein solcher Stoff ist zum Beispiel Ammoniumoxalat, welches erst bei 180°C thermisch zersetzt wird. Bei Verwendung solcher Porenbildner wird daher die EME-Einheit (Elektrode/Membran/Elektrode) vor der Rückprotonierung kurzzeitig auf eine Temperatur bis maximal 210°C erwärmt. Es hat sich gezeigt, daß das Ionomermaterial der EME-Einheit diese Maximaltemperatur bei kurzzeitiger Belastung bis etwa 10 Minuten Dauer ohne Schädigung übersteht, obwohl eine Dauerbelastung des Materials mit Temperaturen oberhalb von 180°C zur Unbrauchbarkeit für elektrochemische Zwecke führt.

Die Porenbildner können teilweise in der Dispersion löslich sein. Beim Trocknen der Elektrodenbeschichtung kristallisieren die gelösten Anteile wieder aus, wobei ungelöste Anteile des Porenbildners als Kristallisationskeime dienen können.

Das Verfahren ist sowohl für die Herstellung der Anode als auch der Kathode geeignet.

Das beschriebene Herstellverfahren für die Gasdiffusionselektrode führt zu einer bimodalen Porenverteilung in der Elektrodenschicht. Die Gesamtporosität von 40 bis 75 % setzt sich daher aus kleinen Poren mit mittleren Durchmessern bis zu 0,5 μm und großen Poren mit mittleren Durchmessern von 1 bis 20 μm zusammen. Die kleinen Poren werden bei der Verdunstung der Lösungsmittel nach dem Aufsprühen der Beschichtungsdispersion auf die heiße Membran gebildet. Die großen Poren entstehen bei der Zersetzung oder der Herauslösung des Porenbildners. Ihr mittlerer Durchmesser kann daher durch die Korngröße des verwendeten Porenbildners beeinflußt werden.

Die bimodale Porenverteilung bewirkt eine Verbesserung des Stofftransportes in der Elektrodenschicht. Durch die Makroporen kann das Reaktionsgas schnell in die Tiefe der Elektrodenschicht gelangen und das gebildete Reaktionswasser abgeführt werden. Die kleinen Poren übernehmen dann den Transport im ionenleitenden Polymer bis hin zu den Katalysatorpartikeln. Die hierbei zurückzulegenden Strecken sind nur noch kurz, so daß der verlangsamte Transport in den kleinen Poren die Leistungsfähigkeit der Elektrode nicht wesentlich beeinträchtigt. Eine deutliche Verbesserung des Transports in der Elektrodenschicht gegenüber konventionellen Beschichtungen wird erst bei Gesamtporositäten von mehr als 40 % beobachtet. Die Versorgung des Elektrokatalysators mit den Reaktionsmedien nimmt mit steigender Porosität zu. Mit steigender Porosität nimmt allerdings die Menge des verfügbaren Elektrokatalysators und des Ionomers in der Beschichtung ab. Damit verschlechtern sich mit steigender Porosität die Anbindung des Katalysators an das Ionomer sowie die ionische Leitfähigkeit der Beschichtung, so daß bei Porositäten oberhalb von 75 % sich die Leistungsdaten der Elektrodenschicht wieder verschlechtern.

Zur Herstellung der Beschichtungsdispersion wird eine Lösung des azidischen, protonenleitenden Ionomers in einem geeigneten Lösungsmittel verwendet. Eine solche Lösung ist kommerziell erhältlich. Es handelt sich dabei um eine 5 Gew.-% Ionomer enthaltende Lösung in einer Mischung aus Isopropanol und Wasser im Gewichtsverhältnis 9 : 1. In dieser Lösung werden Elektrokatalysator und Porenbildner dispergiert. Der Porenbildner weist eine Korngröße zwischen 0,1 und 10 μm auf. Zur Einstellung der Viskosität und der Verdampfungsgeschwindigkeit können der Dispersion weitere Hilfsstoffe zugegeben werden. Geeignet hierfür ist zum Beispiel Glycerin. Vorteilhaft ist auch die Zugabe von Tetrabutylammoniumhydroxid, welches die Thermoplastizität und Temperaturstabilität des Elektrodenionomers erhöhen kann. Tetrabutylammoniumhydroxid wird der Beschichtungsdispersion als letzte Komponente zugefügt.

Zur Beschichtung der Membran mit den Elektroden wird sie auf etwa 130 bis 170°C erwärmt und mit der Dispersion besprüht. Durch Sprühen der Dispersion auf die erwärmte Membran werden die Lösungsmittel forciert verdampft und die Elektrodenschicht getrocknet. Wurden Porenbildner verwendet, die sich schon bei den Temperaturen während der Beschichtung zersetzen, so ist nach der Trocknung die Porenbildung abgeschlossen. Andernfalls wird eine Elektrodenschicht erhalten, die zunächst nur eine gewisse Anfangsporosität aufweist, die vom Fachmann durch Auswahl der Lösungsmittel und der Membrantemperatur in engen Grenzen zwischen etwa 15 und 25 % variiert werden kann. Die Porenbildung wird in diesen Fällen erst durch Herauslösen des Porenbildners während der Rückprotonierung der EME-Einheit in Schwefelsäure beziehungsweise durch eine an die Trocknung anschließende Erwärmung bis auf eine Temperatur von maximal 210°C abgeschlossen.

Abhängig vom Gewichtsverhältnis des verwendeten Porenbildners zum Ionomer läßt sich so die Porosität der Elektrodenschicht bis auf 75 % erhöhen. Das Gewichtsverhältnis Porenbildner/Ionomer kann im Bereich zwischen 0,10 : 1 und 10 : 1 variieren. Bei zu kleinem Anteil an Porenbildner erhöht sich die Porosität der fertigen Elektrode gegenüber ihrer Anfangsporosität nur unwesentlich. Gewichtsverhältnisse Porenbildner/Ionomer von größer als 10 : 1 führen zu mangelhaften Elektroden. Bevorzugt wird ein Gewichtsverhältnis von 1 : 1 angewendet.

Das Auftragen der Elektrodendispersion in einem Heißsprühverfahren (Aufsprühen der Dispersion auf die erwärmte Membran) führt bei geeigneter Viskosität und Feststoffgehalt (Elektrokatalysator und Porenbildner) zu einer gut haftenden Elektrodenschicht von weniger als 100 μm Dicke und nach Rückprotonierung zu einer definierten Porosität.

Die Porosität der Elektroden kann pyknometrisch durch Tränken der Elektroden mit Toluol im Vakuum und Ermitteln der Masseaufnahme an Toluol bestimmt werden. Die Porosität P der Elektroden errechnet sich hieraus als Verhältnis des Volumens des aufgenommenen Toluols zum Volumen der Elektrodenbeschichtung:

$$P = \frac{\text{Volumen des aufgenommenen Toluols}}{\text{Volumen der Elektrodenbeschichtung}} \cdot 100 \ [\%]$$

Das Volumen der Elektrodenbeschichtung ergibt sich aus der Fläche der Elektrode und der unabhängig mit einem Rasterelektronenmikroskop bestimmten Schichtdicke.

Im einzelnen wird die Porosität der Elektroden einer fertigen EME-Einheit wie folgt bestimmt:

1. Eine ausgestanzte EME-Scheibe (Durchmesser 25 mm) wird bei 100°C für 10 min. getrocknet und anschließend gewogen (Einwaage).

2. Überschichten der EME-Scheibe in einem Gefäß mit Toluol.

3. Evakuieren des Gefäßes bis zum Sieden des Toluols.

4. Belüften des Gefäßes und Abtupfen der EME-Scheibe mit einem Tuch zur Entfernung von Toluol auf der Oberfläche der Elektroden.

5. Wiegen der mit Toluol getränkten EME-Scheibe (Auswaage).

6. Bestimmen der in den Poren aufgenommenen Toluolmenge als Differenz von Aus- und Einwaage.

7. Berechnung der Porosität nach obiger Formel unter Berücksichtigung der Dichte von Toluol.

Die porösen Elektroden gemäß der Erfindung weisen eine zerklüftete Oberfläche auf. Ihre Schichtdicke kann daher nur als ein Mittelwert aus rasterelektronenmikroskopischen Aufnahmen ermittelt werden. Bei hochporösen Schichten ist dies mit einer erheblichen Unsicherheit verbunden. In diesen Fällen können die Meßfehler durch Normierung der Messung mit Hilfe einer Schicht geringer Porosität vermindert werden. Hierzu wird eine EME-Einheit ohne Porenbildner angefertigt und gemäß der US 5,211,984 heiß verpreßt. Die so hergestellten Elektroden haben eine glatte Oberfläche. Ihre Dicke kann daher relativ genau bestimmt werden.

Die Porosität $P_1$ dieser Elektrodenschicht wird nach dem oben beschriebenen Verfahren ermittelt, wobei $m_{T1}$ die Masse des aufgenommenen Toluols und $m_{E1}$ die Masse der Elektrodenbeschichtung ist. Zur Bestimmung der Porosität $P_2$ einer hochporösen Elektrodenbeschichtung wird diese ebenfalls mit Toluol getränkt und es werden die Massen $m_{T2}$ und $m_{E2}$ bestimmt. Auf eine Ausmessung der Schichtdicke wird jedoch verzichtet. Vielmehr berechnet sich jetzt die Porosität $P_2$ unter Zuhilfenahme der Meßwerte der heiß gepreßten Elektrode zu:

$$P_2 = \left(\frac{m_{T1} m_{E2} (1-P_1)}{m_{T2} m_{E1} P_1} + 1\right)^{-1} \cdot 100 \ [\%]$$

Das erfindungsgemäße Verfahren liefert Elektroden mit verbesserten Stofftransporteigenschaften und geringeren Diffusionswiderständen der Gasdiffusionselektroden aufgrund der vorteilhaften Makroporosität, welche eine höhere Zellenleistung und eine verbesserte Nutzung des Katalysators im Betrieb mit Luft im Vergleich zu herkömmlichen Verfahren ermöglichen. Das Verfahren ist preiswert und einfach in einen großtechnischen Maßstab zu übertragen und läßt sich auch auf andere Membranmaterialien, wie zum Beispiel sulfoniertes Polyethersulfon, anwenden.

Die folgenden Beispiele verdeutlichen das erfindungsgemäße Herstellverfahren. Es zeigen:

Figur 1: Vergleich der Leistungsdaten der konventionell hergestellten Elektrode-Membran-Einheit aus Vergleichsbeispiel 1 und Vergleichsbeispiel 2 mit den Leistungsdaten der erfindungsgemäßen Elektrode-Membran-Einheit nach Beispiel 1 bei Messungen mit Luft bzw. Sauerstoff als Kathodengas.

Figur 2: Vergleich der Leistungsdaten der konventionell hergestellten Elektrode-Membran-Einheit aus Vergleichsbeispiel 1 und Vergleichsbeispiel 2 mit den Leistungsdaten der erfindungsgemäßen Elektrode-Membran-Einheit nach Beispiel 2 bei Messungen mit Luft bzw. Sauerstoff als Kathodengas.

Figur 3: Vergleich der Leistungsdaten der konventionell hergestellten Elektrode-Membran-Einheit aus Vergleichsbeispiel 1 und Vergleichsbeispiel 2 mit den Leistungsdaten der erfindungsgemäßen Elektrode-Membran-Einheit nach Beispiel 3 bei Messungen mit Luft bzw. Sauerstoff als Kathodengas.

Figur 4: Vergleich der Leistungsdaten der konventionell hergestellten Elektrode-Membran-Einheit aus Vergleichsbeispiel 3 und Vergleichsbeispiel 4 mit den Leistungsdaten der erfindungsgemäßen Elektrode-Membran-Einheit nach Beispiel 1 bei Messungen mit Luft bzw. Sauerstoff als Kathodengas.

Figur 5: Schematische Darstellung des Querschnittes durch eine Elektrodenschicht.

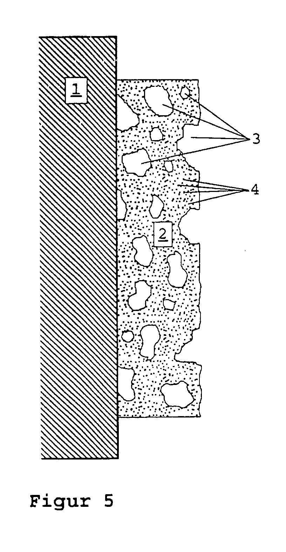

Figur 5 zeigt einen schematischen Querschnitt durch eine erfindungsgemäße Elektrodenschicht. 1 bezeichnet die Polymermembran und 2 die Elektrodenschicht. Die Elektrode besteht aus dem ionenleitenden Polymer und den feinteiligen Pt/C-Katalysatorpartikeln, die in Figur 5 jedoch nicht dargestellt sind. Die Poren der Schicht setzen sich aus kleinen Poren 4, welche bei der Verdampfung der Lösungsmittel gebildet werden, und großen Poren 3 zusammen. Die großen Poren entstehen bei der Zersetzung bzw. Auflösung des Porenbildners.

In den folgenden Beispielen wurden erfindungsgemäße EME-Einheiten (Beispiele 1 bis 3) und zwei EME-Einheiten gemäß der US 5,211,984 als Vergleichsbeispiele hergestellt. In allen Fällen wurde eine Flächenkonzentration an Platin von 0,15 mg Pt/cm$^2$ angestrebt.

Als Festelektrolyt wurde eine Membran aus Nafion® 117 in der Na$^+$-Form verwendet. Das protonenleitende Ionomer in der Beschichtungsdispersion für die Elektroden wurde jeweils durch Ionenaustausch mit Tetrabutylammoniumhydroxid in eine thermoplastische Modifikation überführt, die zu einer besseren Haftung der Beschichtung auf der Polymermembran führte.

Das Massenverhältnis Katalysator/Ionomer in der Beschichtungsdispersion wurde in allen Beispielen auf einen Wert von 2 eingestellt. Für das Massenverhältnis Porenbildner/Ionomer wurde in den erfindungsgemäßen Beispielen der Wert 1 gewählt.

**Vergleichsbeispiel 1**

In Anlehnung an Protocol I aus der US 5,211,984 wurde eine EME-Einheit wie folgt hergestellt: Es wurde eine Suspension aus 3,1 Gew.-% Pt/C-Katalysator (30 Gew.-% Pt auf Ruß Vulcan® XC-72), 31,4 Gew.-% einer 5 %igen Ionomerlösung in 90 Gew.-% Isopropanol und 10 Gew.-% Wasser, 37,7 Gew.% Glycerin, 25,2 Gew.-% Wasser und 2,5 Gew.-% Tetrabutylammoniumhydroxid angefertigt und auf einen PTFE-Träger aufgepinselt. Dieser Elektrodenvorläufer wurde bei einer Temperatur von 150°C getrocknet. Anschließend wurde der Elektrodenvorläufer beidseitig auf die Ionomermembran (Nafion® 117) aufgelegt und bei einer Temperatur von 190°C sowie einem Druck von 100·10$^5$ Pa (100 bar) verpreßt. Nach dem Heißpressen wurde der PTFE-Träger von der Elektrode abgezogen.

Die Elektrode haftete gut auf der Membran. Nach der Rückprotonierung des Ionomeren in 1 N Schwefelsäure war die Herstellung der Elektroden abgeschlossen.

Die fertigen Elektroden hatten eine Dicke von 5 μm, eine Gesamtporosität von 20 % sowie eine Platinbeladung von 0,15 mg Pt/cm$^2$.

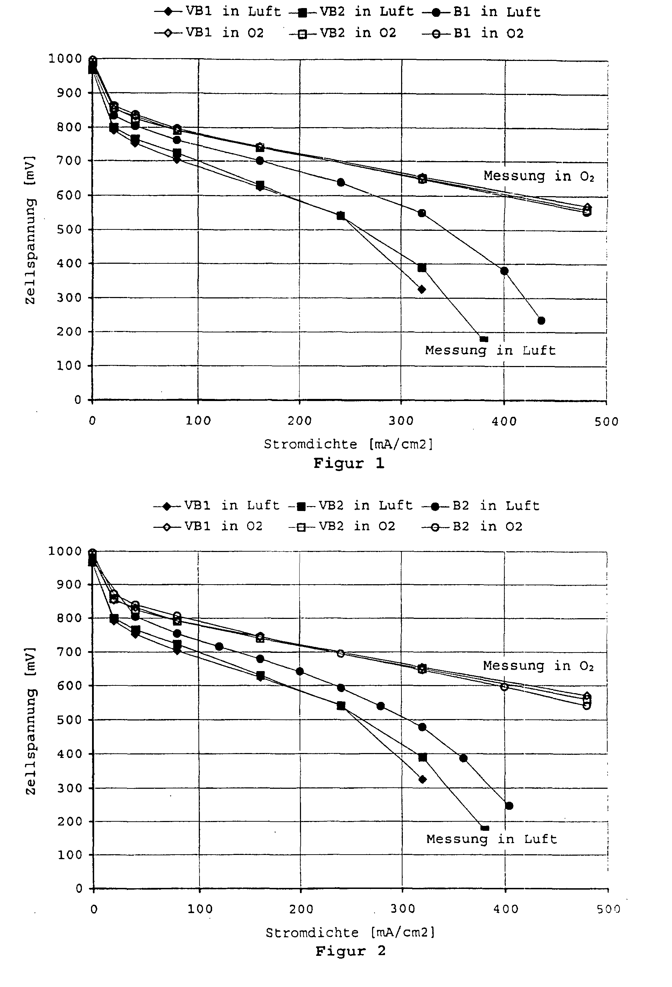

Die Strom-Spannungs-Kurven einer solchen Membranbrennstoffzelle im Luft- und Sauerstoffbetrieb sind in den Figuren 1 bis 3, dargestellt.

**Vergleichsbeispiel 2**

Die Beschichtungsdispersion von Vergleichsbeispiel 1 wurde in Anlehnung an Protocol II aus US 5,211,984 auf die Nafion® 117-Membran aufgesprüht. Der Sprühvorgang erfolgte durch eine Schablone, um eine Elektrode der geforderten Größe zu erhalten. Dieser Vorgang kann nach einem kurzen Antrocknen der Elektrode mehrmals wiederholt werden. Nach dem vollständigen Trocknen der ersten Elektrode nach ca. 20 Minuten bei einer Temperatur von 150°C wurde die Gegenelektrode nach derselben Vorschrift aufgetragen. Die Rückprotonierung erfolgte in 1 N Schwefelsäure. Die Strom-Spannungs-Kurven dieser Zelle sind für den Luft- und Sauerstoffbetrieb in den Figuren 1 bis 3 dargestellt. Die Gesamtporosität der so hergestellten Elektroden betrug 35%, ihre Schichtdicke 10 μm und ihre Pt-Konzentration 0,15 mg Pt/cm$^2$.

**Vergleichsbeispiel 3**

Es wurde eine weitere EME-Einheit nach Vergleichsbeispiel 1 angefertigt. In Abwandlung zu Vergleichsbeispiel 1 wurde der Beschichtungsdispersion 1,5 Gew.-% Li$_2$CO$_3$ als Porenbildner zugefügt.

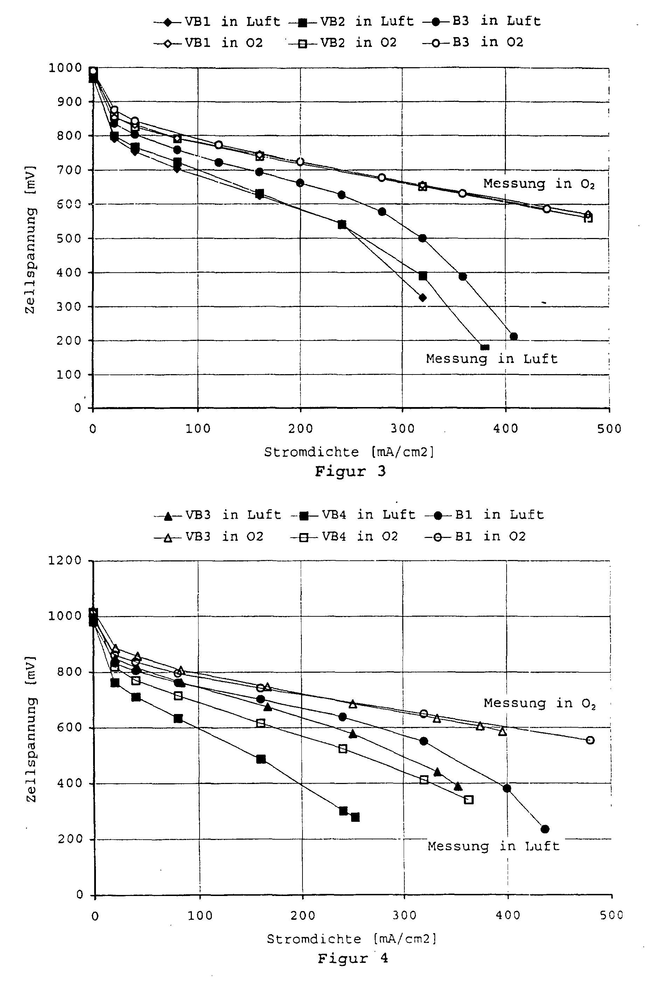

Die fertigen Elektroden hatten eine Dicke von etwa 5 μm, eine Gesamtporosität von 40 % sowie eine Platinbeladung von 0,15 mgPt/cm$^2$. Die Strom-Spannungs-Kurven dieser EME-Einheit sind in Figur 4 dargestellt.

**Vergleichsbeispiel 4**

Es wurde eine Mischung aus Katalysator (20 Gew.-% Pt auf Ruß Vulcan® XC 72), Ionomerlösung, Glycerin und einer 20 %igen Lösung von Tetrabutylammoniumhydroxid (TBAOH) in Wasser hergestellt.

Um eine für den Siebdruck geeignete Konsistenz einzustellen, wurde die Paste im Umlufttrockenschrank bei 40 - 50°C eingeengt. Anschließend wurde Li$_2$CO$_3$ zugegeben und untergerührt. Mit Hilfe eines Dreiwalzwerkes wurde die Mischung dispergiert. Die entstehende Paste hatte folgende Zusammensetzung:

| Katalysator | 7,67 % |
|---|---|
| Nafion (Polymer) | 2,56 % |
| $Li_2CO_3$ | 2,6 % |
| TBAOH | 1 % |
| Glycerin | 63,85 % |
| Alkohole, Wasser | 22,32 % |

Die Viskosität der Paste betrug 1,86 Pas bei einem Schergefälle von 100/s. Die Paste wurde durch ein VA-Stahl-Sieb (80 mesh, 150 µm Emulsionsstärke, Siebausschnittsfläche 5 cm x 5 cm) auf eine Nafion 117-Membran in $Na^+$-Form aufgedruckt und bei 140°C getrocknet. Diese Prozedur wurde so lange wiederholt, bis eine Platinbeladung von 0,15 mg/cm$^2$ erreicht war. Anschließend wurde die Rückseite der Membran auf die gleiche Weise hergestellt.

Die Reprotonierung und die Zersetzung des $Li_2CO_3$ erfolgte in 1 N Schwefelsäure. Die fertigen Elektroden hatten eine Porosität von 31 % und eine Platinbeladung von 0,15 mgPt/cm$^2$.

Die Strom-Spannungs-Kurven einer solchen Membranbrennstoffzelle im Luft- und Sauerstoffbetrieb sind in Figur 4 als Kurve VB4 dargestellt.

## Beispiel 1

Zur Herstellung einer Elektrode-Membran-Einheit nach dem erfindungsgemäßen Verfahren wurde eine Beschichtungsdispersion aus 3,1 Gew.-% Pt/C-Katalysator (30 % Pt), 30,9 Gew.-% einer 5 %igen Ionomerlösung in 90 Gew.-% Isopropanol und 10 Gew.-% Wasser, 37,2 Gew.-% Glycerin und 24,8 Gew.-% Wasser, 2,5 Gew.-% Tetrabutylammoniumhydroxid sowie 1,5 Gew.-% $Li_2CO_3$ nach dem im Vergleichsbeispiel 2 beschriebenen Verfahren auf eine auf 150°C geheizte mit Natriumionen beladene Nafion® 117 Membran aufgesprüht. Die Rückprotonierung und die Zersetzung des $Li_2CO_3$ erfolgt in 1 N Schwefelsäure. Die Strom-Spannungs-Kurven dieser Zelle, die höhere Zellspannungen und verminderte Stofftransportwiderstände als auch eine wesentlich verbesserte Katalysatornutzung in Luft erkennen lassen, sind in Figur 1 dargestellt. Die Gesamtporosität der so hergestellten Elektrode betrug 65%. Die Platin-Konzentration war gleich den Konzentrationen der Vergleichsbeispiele. Die mittlere Schichtdicke lag bei 15 - 20 µm.

## Beispiel 2

Es wurde eine weitere Elektrode-Membran-Einheit wie in Beispiel 1 beschrieben hergestellt. Im Unterschied zu Beispiel 1 wurde als Porenbildner 1,5 Gew.-% Ammoniumoxalat verwendet.

Die Zersetzung des Porenbildners erfolgte nach der Trocknung der Elektrode durch Erhöhen der Temperatur der Membran auf 180°C für die Dauer von 5 Minuten. Die anschließende Rückprotonierung wurde wie in Beispiel 1 in 1 N Schwefelsäure vorgenommen. Die Gesamtporosität der so hergestellten Elektrode betrug 48%. Schichtdicke und Platin-Konzentration waren gleich wie in Beispiel 1.

## Beispiel 3

Es wurde eine weitere Elektrode-Membran-Einheit wie in Beispiel 1 beschrieben hergestellt. Im Unterschied zu Beispiel 1 wurde als Porenbildner 1,5 Gew.-% Ammoniumcarbonat verwendet.

Das Ammoniumcarbonat zersetzte sich unter Porenbildung während des Trocknungsvorganges. Die Rückprotonierung wurde wieder in 1 N Schwefelsäure vorgenommen. Die Gesamtporosität dieser Elektrode betrug 42%. Schichtdicke und Platin-Konzentration waren gleich wie in Beispiel 1.

## Anwendungsbeispiel

Die Strom-Spannungskurven der in den obigen Beispielen hergestellten Elektrode-Membran-Einheiten wurden galvanostatisch quasi-stationär aufgenommen. Hierzu wurden die EME-Einheiten auf beiden Seiten mit Graphit-Papier als Gasverteiler und Stromabnehmer belegt und in einen Graphit-Zellenblock eingespannt. Die wirksame Elektrodenfläche betrug 25 cm$^2$.

Die Zellentemperatur wurde während der Messungen auf 75°C konstant gehalten. Der anodenseitige Wasserstoffstrom betrug 300 ml/min bei einem Druck von $1 \cdot 10^5$ Pa (1 bar) und wurde mit Wasserdampf entsprechend dem Gleichgewichtsdampfdruck bei 85°C befeuchtet. Kathodenseitig wurde die Zelle mit trockener Luft oder reinem Sauerstoff mit einem Volumenstrom von 300 ml/min beziehungsweise 150 ml/min versorgt.

Die Figuren 1 bis 4 zeigen jeweils die gemessenen Strom-Spannungskurven der erfindungsgemäßen Elektrode-Membran-Einheiten der Beispiele 1 bis 3 (B1, B2, B3) im Vergleich zu den Strom-Spannungs-Kurven der Elektrode-Membran-Einheiten der Vergleichsbeispiele 1 bis 4 (VB1, VB2, VB3, VB4).

Die erfindungsgemäßen Elektrode-Membraneinheiten zeigen aufgrund ihrer hohen Porosität wesentlich verbesserte Leistungsdaten bei Luftbetrieb. Dies gilt auch gegenüber den Vergleichsbeispielen 3 und 4, welche beide unter Verwendung von Porenbildner in der Beschichtungsdispersion in einem Heißpreßverfahren (VB3) und in einem SiebdruckVerfahren (VB4) hergestellt wurden.

Einzig die erfindungsgemäße Kombination aus Heißsprühen und Porenbildner führt zu bisher nicht zugänglichen Porositäten über 40 % bei verbesserten Leistungsdaten im Luftbetrieb.

**Patentansprüche**

1. Gasdiffusionselektrode für Membranbrennstoffzellen auf einer protonenleitenden Polymermembran bestehend aus einem feinteiligen Elektrokatalysator, welcher in einem protonenleitenden Polymer dispergiert ist, wobei die Gasdiffusionselektrode eine Dicke im Bereich zwischen 5 und 100 µm aufweist, wobei
die Elektrode eine bimodale Porenverteilung mit einer Gesamtporosität von mehr als 40 und weniger als 75 % aufweist, wobei die Porosität sich aus kleinen Poren mit mittleren Durchmessern bis zu 0,5 µm und großen Poren mit mittleren Durchmessern von 1 bis 20 µm zusammensetzt.

2. Gasdiffusionselektrode nach Anspruch 1, wobei die Elektrode eine Platin-Konzentration im Bereich zwischen 0,01 und 4 mg Pt/cm$^2$ aufweist.

3. Verfahren zur Herstellung einer porösen Gasdiffusionselektrode für Membranbrennstoffzellen auf einer ionenleitenden Polymermembran durch Beschichten der Membran mit einer Dispersion aus einem feinteiligen Elektrokatalysator und wenigstens einem Porenbildner in einer Lösung eines ionenleitenden Polymers, wobei die Polymermembran in einer nichtazidischen, temperaturstabilen Modifikation vorliegt und während der Beschichtung auf eine Temperatur im Bereich zwischen 130 und 170°C erwärmt ist, Trocknen der Beschichtung und Rückprotonieren von Membran und Beschichtung in einer Säure, wobei
der Porenbildner in feinteiliger Form mit einer mittleren Korngröße zwischen 0,1 und 10 µm vorliegt.

4. Verfahren nach Anspruch 3, wobei der Porenbildner in der Säure löslich ist.

5. Verfahren nach Anspruch 3, wobei der Porenbildner im Temperaturbereich zwischen 50 und 170°C thermisch zersetzbar ist.

6. Verfahren nach Anspruch 3, wobei der Porenbildner im Temperaturbereich zwischen 170 und 210°C thermisch zersetzbar ist und die Elektrodenbeschichtung vor dem Rückprotonieren für die Dauer von bis zu 5 Minuten auf eine Temperatur von bis zu 210°C erwärmt wird.

7. Verfahren nach Anspruch 3, wobei das Massenverhältnis von löslichem Ionomer und Porenbildner in der Beschichtungsdispersion im Bereich zwischen 0,1 : 1 und 10 : 1, bevorzugt 1 : 1 bis 1 : 2, gewählt wird.

8. Verfahren nach Anspruch 4, wobei als Porenbildner Carbonate der Alkali- oder Erdalkalimetalle verwendet werden.

9. Verfahren nach Anspruch 5, wobei als Porenbildner Ammoniumcarbonat verwendet wird.

10. Verfahren nach Anspruch 6, wobei als Porenbildner Ammoniumoxalat verwendet wird.

**Claims**

1. A gas diffusion electrode for membrane fuel cells on a proton-conducting polymer membrane consisting of a finely divided electrocatalyst dispersed in a proton-conducting polymer, wherein the gas diffusion electrode has a thickness in a range of between 5 and 100 µm, wherein the electrode has a bimodal pore distribution with a total porosity of more than 40 and less than 75%, wherein the porosity is composed of small pores having an average diameter of up to 0.5 µm and large pores having an average diameter of 1 to 20 µm.

2. The gas diffusion electrode according to claim 1, wherein the electrode has a platinum concentration in a range between 0.01 and 4 mg Pt/cm$^2$.

3. A method for producing a porous gas diffusion electrode for membrane fuel cells on an ion-conducting polymer membrane comprising coating the membrane with a dispersion of a finely divided electrocatalyst and at least one pore-forming material in a solution of an ion-conducting polymer, said polymer membrane being in a non-acidic, temperature-stable state and is heated to a temperature in a range of 130 to 170°C during coating, drying the coating and re-protonating of the membrane and the coating with an acid, wherein the pore-forming material is in finely divided form with an average particle size between 0.1 and 10 µm.

4. The method according to claim 3, wherein the pore-forming material is soluble in said acid.

5. The method according to claim 3, wherein the pore-forming material is thermally decomposable in the temperature range between 50 and 170°C.

6. The method according to claim 3, wherein the pore-forming material is thermally decomposable in the temperature range between 170 and 210°C and the electrode coating is heated before the re-protonating for a period of up to 5 minutes to a temperature of up to 210°C.

7. The method according to claim 3, wherein the mass ratio of soluble ionomer and pore-forming material in the coating dispersion is selected in a range between 0.1:1 and 10:1, preferably 1:1 to 1:2.

8. The method according to claim 4, wherein a carbonate of the alkali- or alkaline-earth metals is used as the pore-forming material.

9. The method according to claim 5, wherein ammonium carbonate is used as the pore-forming material.

10. The method according to claim 6, wherein ammonium oxalate is used as the pore-forming material.

## Revendications

1. Electrode à diffusion gazeuse pour piles à combustible à membrane sur une membrane en polymère conducteur protonique composée d'un électrocatalyseur à fines particules qui est dispersé dans un polymère conducteur protonique, l'électrode à diffusion gazeuse présentant une épaisseur comprise entre 5 et 100 μm, dans laquelle
l'électrode présente une répartition bimodale de pores d'une porosité totale de plus de 40 et de moins de 75 %, la porosité se composant de petits pores de diamètres moyens de 0,5 μm maximum et de grands pores de diamètres moyens compris entre 1 et 20 μm.

2. Electrode à diffusion gazeuse selon la revendication 1, dans laquelle
l'électrode présente une concentration de platine comprise entre 0,01 et 4 mg Pt/cm$^2$.

3. Procédé de fabrication d'une électrode poreuse à diffusion gazeuse pour piles à combustible à membrane sur une membrane en polymère conducteur ionique en recouvrant la membrane d'une dispersion composée d'un électrocatalyseur à fines particules et d'au moins un agent porogène dans une solution d'un polymère conducteur ionique, la membrane en polymère se présentant dans une modification stable à la température et non acide, et étant réchauffée à une température comprise entre 130 et 170°C pendant le revêtement, en séchant le revêtement, en effectuant une protonation de retour de la membrane et en procédant au revêtement dans un acide, dans lequel
l'agent porogène existe sous forme de particules fines d'une granulosité moyenne comprise entre 0,1 et 10 μm.

4. Procédé selon la revendication 3, dans lequel l'agent porogène est soluble dans l'acide.

5. Procédé selon la revendication 3, dans lequel

l'agent porogène peut être décomposé thermiquement dans la plage de température comprise entre 50 et 170°C.

6. Procédé selon la revendication 3, dans lequel l'agent porogène peut être décomposé thermiquement dans la plage de température comprise entre 170 et 210°C, et le revêtement des électrodes est réchauffé avant la protonation de retour à une température de 210°C maximum pour une durée de 5 minutes maximum.

7. Procédé selon la revendication 3, dans lequel le rapport de masse de l'ionomère soluble et de l'agent porogène dans la dispersion du revêtement est choisi dans la plage comprise entre 0,1 : 1 et 10 : 1, de préférence entre 1 : 1 et 1 : 2.

8. Procédé selon la revendication 4, dans lequel comme agents porogènes on utilise des carbonates des métaux alcalins ou des métaux alcalino-terreux.

9. Procédé selon la revendication 5, dans lequel comme agent porogène on utilise du carbonate d'aluminium.

10. Procédé selon la revendication 6, dans lequel comme agent porogène on utilise de l'oxalate d'aluminium.

Figur 1

Figur 2

Figur 3

Figur 4

Figur 5